# EUROPÄISCHE PATENTSCHRIFT

(11) **EP 0 557 819 B1**
(45) Veröffentlichungstag und Bekanntmachung des Hinweises auf die Patenterteilung: **23.10.1996**
(21) Anmeldenummer: 93102221.4
(22) Anmeldetag: 12.02.1993
(51) Int. Cl.: A22C 13/00

(54) **Schlauchhülle, mit einer organochlorfreien O2- und wasserdampfundurchlassigen Auflage, Verfahren zu ihrer Herstellung und sowie ihre Verwendung**
Tubular casing, containing organochlore-free coatings impermeable to oxygen and water vapor, process for its manufacture and use thereof
Enveloppe tubulaire, renfermant des revêtements exempts de chlore organique, imperméables à l'oxygène et à la vapeur d'eau, son procédé de fabrication et son application

(30) Priorität: 25.02.1992 DE 4205631; 08.10.1992 DE 4233883; 08.10.1992 DE 4233884
(43) Veröffentlichungstag der Anmeldung: 01.09.1993
(73) Patentinhaber: Wolff Walsrode Aktiengesellschaft, D-29655 Walsrode (DE)
(72) Erfinder: Sirinyan, Kirkor, Dr., D-5060 Bergisch Gladbach 2 (DE); Müller, Hanns Peter, Dr., D-5068 Odenthal (DE); Dhein, Rolf, Dr., D-4150 Krefeld (DE); Weber, Gunter, Dr., D-3032 Fallingbostel (DE); Meyer-Stork, Sebastian, Dr., D-3030 Walsrode (DE); Stiem, Michael, Dr., D-3031 Eicheloh (DE)
(74) Vertreter: Braun, Rolf, Dr.

(56) Entgegenhaltungen:
- EP-A- 0 001 545
- EP-A- 0 006 551
- EP-A- 0 457 178
- DE-A- 2 935 080

## Beschreibung

Die Erfindung bezieht sich auf eine mehrlagige, organochlorfreie Schlauchhülle bestehend
a. aus einem regenerierten Cellulose-Träger,
b. gegebenenfalls aus einer Haftvermittlerschicht,
c. aus einer 5-40 µm starken, organochlorfreien, polymeren, H₂O-Dampfsperrschicht, dadurch gekennzeichnet, daß eine H₂O-Dampfdurchlässigkeit von höchstens 50 g/m² 24 h und eine Oberflächenspannung von ≦ 34 mN/m aufweist,
d. aus einer 5-40 µm starken, polymeren, organochlorfreien O₂-Sperrschicht, dadurch gekennzeichnet, daß sie eine Sauerstoffdurchlässigkeit von höchstens 120 cm³/m² 24 h bar und eine Oberflächenspannung von ≧ 38 N/m aufweist.

Ferner ein Verfahren zu ihrer Herstellung und sowie ihre Verwendung als Wursthülle für Würste vom Koch- und Brühwursttyp.

Im Rahmen der Erfindung ist unter "organochlorfreie Schlauchhülle" eine solche Hülle zu verstehen, die frei von kovalent gebundenen Chloratomen ist.

Schlauchhüllen auf Basis von Cellulose, beispielsweise aus regenerierter Cellulose, die durch längsaxiales Falten und Verkleben der sich überlappenden, längsaxial erstreckenden Randzonen hergestellt werden, sind bereits bekannt (s. beispielsweise FP 0037543, EP 0054162, US-P 2 148 884, US-P 2 226 442, US-P 2 685 769, US-P 2 685 770, US-P 2 757 495 und US-P 2 773 773).

Ferner können den Dokumenten DE 2 829 102 und DE 2 512 994 weitere Verfahren zur kontinuierlichen Herstellung faserverstärkter Cellulosehydratschläuche sowie Vorrichtungen zur Verfahrensdurchführung entnommen werden.

Derartige Schlauchhüllen sind u.a. gegenüber Wasserdampf und Sauerstoff durchlässig, was z.B. bei der Verwendung als Hülle für Würste vom Rohwurst-Typ gewünscht ist, sich jedoch bei der entsprechenden Nutzung für Würste vom Koch- und Brühwurst-Typ als nachteilig erweist. Für letztere ist eine gute Wasserdampf-Sperre der Schlauchhülle erforderlich, um Wasserverluste bei der Herstellung und Lagerung der Würste zu vermeiden. Ebenso wird hierfür eine gute Sauerstoff-Barriere benötigt, damit oxidative Schädigungen des Brätes auszuschließen sind.

Zur Erreichung dieser Sperrschicht-Eigenschaften werden daher Cellulose-Schlauchhüllen oft nachträglich beschichtet. Neben der Barriere-Wirkung müssen geeignete Auflagen auch über eine ausreichende Haftung zur Schlauchhülle und eine genügende Resistenz verfügen, um die verschiedenen thermischen und mechanischen Belastungen, die üblicherweise im Laufe des Wurstverarbeitungsprozesses auftreten, ohne Beeinträchtigung überstehen können. Außerdem muß die beschichtete Hülle durch die Fähigkeit zum hydrophilen Schrumpfen während Wurstreifung und eine ausreichende Lagerstabilität gekennzeichnet sein.

Aus diesem Grund werden hierzu thermisch stabile, elastische, halogenierte Polyolefine, vorzugsweise Vinylidenchlorid-haltige Polyolefine (PVDC) bzw. deren Co- und Mischpolymerisate aus Acrylsäure, Methacrylsäure und Acrylnitril eingesetzt (vgl. beispielsweise DE 2 512 994 und EP 0 054 162).

Aus ökologischen Gründen besteht aber der Bedarf, für diesen Zweck organochlorfreie Systeme einzusetzen.

Zur Verwendung von künstlichen Wursthüllen geeignete Schläuche auf Basis von Cellulosehydrat, die eine Beschichtung aus einem Vinylidenchlorid-haltigen Homo- oder Copolymer aufweisen, kommen entweder als Rollen oder einseitig abgebunden als Abschnitte in den Handel. Wursthüllen in größeren Mengen von beispielsweise 20-50 m oder mehr werden im allgemeinen zu etwa 20-50 cm langen, stabförmigen Gebilden gerafft und zusammengepreßt. Diese Gebilde werden auch "Raupen" genannt.

Die Schlauchraupen werden dann mit Hilfe bekannter Wurstabfüllmaschinen fortlaufend mit Wurstmasse gefüllt, indem man diese in die Raupe einpreßt. Dieses rationelle Wurstabfüllverfahren läßt sich jedoch mit den Schläuchen aus Cellulosehydrat mit einem Sperrschichtüberzug auf Basis von dünnen, 5-40 µm starken, chlorfreien Mono- oder Copolymerisaten nicht durchführen, da Schläuche dieser Art nicht der starken mechanischen Beanspruchung gewachsen sind. Durch die mechanische Beanspruchung wird der Schlauchüberzug vor allem im Kantenbereich der Schlauchfalten beschädigt. Dies führt zu einer unerwünschten Erhöhung der H₂O-Dampf- sowie O₂-Durchlässigkeit des Überzuges, wodurch die Haltbarkeit und die Qualität der Wurst nachhaltig beeinträchtigt werden.

Die EP-A-0 457 178 offenbart eine organochlorfreie Schlauchhülle mit einer Barriereschicht gegenüber O₂ und Wasserdampf.

Der Erfindung liegt deshalb die Aufgabe zugrunde, Schlauchhüllen zur Verfügung zu stellen, deren Beschichtung organochlorfrei ist und gleichzeitig die bislang von PVDC-haltigen Auflagen erbrachten, für die Herstellung von Würsten des Koch- und Brühwurst-Typs notwendigen Eigenschaften erfüllen.

Diese Aufgabe wird überraschenderweise dadurch gelöst, daß man die Schlauchhülle mit einer mehrlagigen, organochlorfreien, polymeren Beschichtung verschiedener Oberflächenspannungen versieht.

Die erfindungsgemäße Lösung dieser Aufgabe ist überraschend, weil bekannterweise die Polymerauflagen mit der Oberflächenspannung 36-45 mN/m wie Acrylnitrilcopolymerisate usw. hydrophile Kunststoffe sind. Ihre H₂O-Aufnahmekapazität liegt bei ≧ 2 %. Ferner liefert überraschenderweise die Kombination der verschiedenen Komponenten der vorliegenden Beschichtung deutlich bessere Barriereeigenschaften als die Summe der Sperrwirkung der einzelnen Komponenten.

Der Literatur kann entnommen werden, daß Polyvinylalkohole sich im trockenen Zustand durch ihr hervorragendes Barriereverhalten gegenüber O₂ auszeichnen (vgl. beispielsweise Polymer Handbook, Chapt. VI, S. 439, John Willey and Sons, New York, Toronto, Brisbane 1989).

Diese Polymerisate sind ebenso stark hydrophile Kunststoffe. Ihre H₂O-Aufnahmekapazität liegt bei ≧ 2 % und ihre gute O₂-Sperreigenschaft wird durch das aufgenommene Wasser negativ beeinflußt. Aus diesem Grund können sie in diesem Bereich nicht eingesetzt werden.

Gegenstand der Erfindung ist eine Schlauchhülle, insbesondere zur Verwendung als Wurthülle für Koch- und Brühwürste bzw. Würste vom Leberwursttyp, dadurch gekennzeichnet, daß sie
a. aus einem regenerierten Cellulose-Träger,
b. gegebenenfalls aus einer Haftvermittlerschicht,
c. aus einer 5-40 µm starken, organochlorfreien O₂- und H₂O-Dampfsperrschicht, die eine H₂O-Dampfdurchlässigkeit von höchstens 50 g/m²·24 h und eine Oberflächenspannung von ≦ 34 mN/m aufweist und
d. aus einer 5-40 Um starken, chlorfreien, O₂-Sperrschicht, die eine Sauerstoffdurchlässigkeit von höchstens 120 cm³/m²·24 h bar und eine Oberflächenspannung von ≧ 38 mN/m aufweist, besteht.

Als Basismaterial für die Herstellung von Schlauchhüllen werden bekannterweise Cellulose (Zellglas, regenerierte Cellulose, Cellulosehydrat) und Cellulosederivate wie Celluloseether, Proteine, Kollagen, Alginate, Stärken und andere natürliche oder synthetische Polymeren eingesetzt. So können Cellulosebahnen, die nach dem Viskoseverfahren (vgl. beispielsweise US-PS 3 884 270) durch Denitrierung von Cellulosenitrat oder Hydrolyse anderer Cellulosederivate mit wäßrigen oder alkoholischen Alkalilösungen (vgl. US-PS 3 546 209) hergestellt werden, eingesetzt werden. Auch andere Cellulosematerialien wie Celluloseether, z.B. Alkyl- oder Hydroxyalkylcellulose oder Mischether, können zu Trägern verarbeitet werden.

Selbstverständlich können auch Schlauchhüllen, die neben dem Cellulosehydrat noch zusätzliche Weichmacher wie Glykol, Glycerin, Polyglykol, Sorbit und Wasser enthalten, eingesetzt werden.

Ferner können zur Herstellung der erfindungsgemäßen Schlauchhüllen modifizierte Cellulosehydrattypen, die durch Umsetzung von Cellulosehydrat mit Alkylamin- und/oder Alkylamid-bis-di-methylen-triazinon-tetra-methylen-triazinon-tetramethylol herstellbar sind, eingesetzt werden.

Die erfindungsgemäß geeigneten Schlauchhüllen können eine Faserverstärkung aufweisen. Hierzu ist bekannterweise z.B. der Einsatz von Hanf- oder Flachsfasern, oder die Verwendung von Synthesefasern auf der Basis von Polyamid, Polyester oder Polyacrylnitril etc. geeignet. Die bahnförmige Faserverstärkung kann ein textiles Gebilde wie z.B. einen Faservliesstoff als wirren oder geordneten Spinnfasern, ein Filament oder multiples Filament aus natürlichem oder synthetischem Material, ein Gewebe, Netzwerk, Gitter oder Gewirke darstellen.

Neben dem Basismaterial und gegebenenfalls einer Faserverstärkung können die Schlauchhüllen noch zusätzliche Komponenten enthalten, die z.B. als Feuchthaltemittel wirken. Außerdem ist der Einsatz weiterer Hilfsstoffe wie Pigmenten oder Bakteriziden bekannt.

Auf Cellulose basierende Schlauchhüllen werden häufig nach dem Viskoseverfahren hergestellt. Viskoselösungen können bekanntermaßen z.B. durch die Umsetzung von Alkalicellulose mit Schwefelkohlenstoff zum Xanthat dargestellt werden. Beim Einsatz faserverstärkter Schlauchhüllen erfolgt die Applikation u.a. durch Beschichtung, Tauch-Imprägnierung oder Besprühung der Faserbahn mit der Viskose-Lösung (vgl. z.B. US 2 999 788). In den weiteren Verarbeitungsstufen werden die Viskose-haltigen Vorprodukte dann in einem schwefelsauren Fällbad behandelt, um die Cellulose zu regenerieren, anschließend mit Wasser neutral gewaschen, in einem Natriumsulfit-Bad entschwefelt und in einem weiteren Bad mit Feuchtehaltemitteln imprägniert. Nach der abschließenden Trocknung bei 80-140°C und Konditionierung weisen die Cellulose-Schlauchhüllen eine Dicke von 20-50 µm und ein Flächengewicht von 25-650 g/m² auf.

Anschließend werden diese Schlauchhüllen gegebenenfalls "haftfest" beschichtet.

Im Rahmen der Erfindung ist unter "haftfester Beschichtung" eine solche Verbundqualität zu verstehen, die unter den in der Praxis der Wurstverarbeitung üblicherweise auftretenden thermischen und mechanischen Belastung in hinreichender Weise erhalten bleibt.

Ferner ist im Rahmen der Erfindung unter "haftfesten Beschichtungen" eine solche Verbundqualität zu verstehen, die eine Zerstörung oder ein Ablösen der H₂O-Dampf- und O₂-Sperrschichten von der Schlauchhülle trotz einer Lagerung für 7 Stunden in kochendem Wasser sowie nach Kontakt mit der Wurstmasse ausschließt.

Verfahren zum haftfesten Beschichtungen von Schlauchhüllen vorzugsweise auf Basis von regenerierter Cellulose, dadurch gekennzeichnet, daß man ihre Oberfläche mit Haftvermittlern vorzugsweise mit neutralen oder kationischen Polyaminen oder Polyamidpolyaminen versieht.

Solche Haftvermittler sind bekannt (vgl. beispielsweise US-PS 2 573 956 oder GB-PS 908.205). In diesem Zusammenhang sei auf die Reaktionsprodukte aus aliphatischen Polyaminen wie 2,6-Polyamid, Ethylentriamin und Epichlorhydrin hingewiesen. Ferner seien Polyamine, die durch Umsetzen von Epichlorhydrin mit Dipropylentriamin oder mit Bis-(3-Aminopropyl)-methylamin herstellt werden, erwähnt.

Die zur Durchführung der erfindungsgemäßen Beschichtung geeigneten Polyamid-Polyamine können bekannterweise durch Kondensation von aliphatischen Carbonsäuren, die 3-15 Kohlenstoffatome im Molekül aufweisen, mit einem der bereits erwähnten Polyamine, welche mindestens eine sekundäre und zwei primäre Amingruppen aufweisen, z.B. Polyalkylenpolyamine, hergestellt werden. Als Carbonsäure kommen primär Diglykolsäure, Bernsteinsäure, Glutarsäure und Adipinsäure in Frage. Selbstverständlich können ihre kationischen Typen ebensogut zur Durchführung des erfindungsgemäßen Verfahrens eingesetzt werden.

Der Haftvermittler wird vorzugsweise aus wäßriger Lösung aufgebracht und bei mäßiger Wärme (^{∼} 100°C) getrocknet. Die Haftvermittler-Lösung kann zweckmäßigerweise Cellulose-Weichmacher, insbesondere ein- oder mehrwertige Alkohole, wie Glycerin und/oder Propandiol, oder deren Mischungen in üblicher Menge enthalten. Selbstverständlich kann der Haftvermittler in Form einer organischen Lösung, z.B. in Benzin, Essigester, Toluol, Aceton oder Alkoholen, oder als Schmelze auf die Schlauchoberfläche aufgebracht werden.

Selbstverständlich sind auch andere Haftvermittler, sofern sie die an sie gerichteten Forderungen bezüglich der hohen Kochfestigkeit, mechanischen Stabilität und lebensmittelrechtlichen Unbedenklichkeit erfüllen, zur Durchführung des erfindungsgemäßen Verfahrens geeignet. In diesem Zusammenhang sei beispielsweise auf Polyacrylsäureester, deren Copolymere mit Styrol und Butadien und ferner auf Ethylen-Vinylacetat-Copolymere hingewiesen.

Ein wesentliches Merkmal der Erfindung ist es, daß die H₂O-Sperrschicht eine zusätzliche Olefinmodifizierung aufweist.

Die beanspruchte Olefinmodifizierung erfolgt erfindungsgemäß unter Verwendung von Wachsen natürlichen und synthetischen Ursprungs sowie deren Mischungen untereinander. Natürliche Wachse sind dabei z.B. Candelilla-, Carnauba-, Montan- und Paraffin-Wachse, synthetische u.a. Paraffin- und Polyethylen-Wachse. Solche Verbindungen sind bekannt und z.B. in Ullmanns Encyklopädie der technischen Chemie, Bd. 24, S. 1-49, Verlag Chemie, Weinheim (1983) ausführlich beschrieben.

Einschränkungen hinsichtlich des Schmelzbereiches der erfindungsgemäß einzusetzenden Wachse ergeben sich dadurch, daß einerseits eine genügende HeißwasserResistenz der Beschichtung gewährleistet sein muß und andererseits noch eine vollständige Verfilmung beim Beschichten möglich ist. Bevorzugt wird deshalb ein Schmelzbereich zwischen 50 und 110°C, und besonders zwischen 60 und 90°C. In diesem Rahmen erweisen sich auch Mischungen höher und niedriger schmelzender Wachse als effektiv. Hinsichtlich der Teilchengröße der dispergierten oder emulgierten Wachse sind Partikeldurchmesser unter 0,1 µm und insbesondere unter 0,05 µm zu bevorzugen.

Eine bevorzugte Form des Auftrages der organohalogenfreien Ausstattung bildet die Applikation aus wäßriger Lösung, Emulsion oder Dispersion. Deshalb kann die Emulgier- bzw. Dispergierbarkeit der erfindungsgemäß geeigneten Wachse durch den an sich bekannten Einbau polarer Gruppen verbessert werden (vgl. z.B.: G.A. Russel, J.Am.Chem.Soc., 79 (1957) 3871; M. Irving et al., Polym. Degrad. Stab., 5 (1983) 467; N.G. Gaylord, J.Polym. Sci. Polym. Lett. Ed., 21 (1983) 23-30; A. Neyishi et al., J, Appl. Polym. Sci., 22 (1978) 2953 und A. Hoff, J. Appl. Poly. Sci., 29 (1984) 465). Die Verfahren dazu sind ebenfalls beschrieben (z.B. in G.M. Gale, Appl. Organomet. Chem., 2 (1988) 17-31).

Zur Durchführung der erfindungsgemäßen Polyolefinmodifizierung sind ferner Dispersionen oder Emulsionen auf der Basis von Ethylen, Propylen und Butylen bzw. deren Co-, Ter- und Mischpolymerisate untereinander geeignet. Zur Durchführung des Verfahrens werden jedoch vorzugsweise solche mit einem Schmelzbereich zwischen 80-130°C, besonders bevorzugt die mit einem Schmelzbereich von 100-130°C, eingesetzt.

Ihre Molmasse kann im Bereich von 1,500-10⁶ g/Mol breit variiert werden, Solche mit der Molmasse 3.000-100.000 g/Mol sind jedoch besonders zu bevorzugen.

Die besagten Polyolefinemulsionen bzw. -dispersionen sind bekannt.

Sie sind auf dem direkten Wege der Emulsions- bzw. Dispersionspolymerisation problemlos herstellbar (vgl. hierzu Kunststoff-Handbuch, Bd, IV, Polyolefine, Hanser Verlag München (1969) und DE 2 338 478).

Die Menge der Polyolefin bzw. Wachsmasse auf Basis von besagten Emulsionen oder Dispersionen kann zwischen 1-50 Gew.-% (bezogen auf die gesamte Bindemittelmasse) breit variiert werden. Mengen zwischen 10-30 Gew.-% und insbesondere Mengen zwischen 15-20 Gew.-% sind bevorzugt.

Im Rahmen der beanspruchten organohalogenfreien Ausstattung werden als Polymerharze erfindungsgemäß solche Systeme eingesetzt, die eine feindisperse Verteilung der beschriebenen Wachse und deren sichere Verankerung mit der Grenzfläche der Unterlage ermöglichen, so daß es zu einer thermisch und mechanisch beständigen Hydrophobierung des Trägermaterials kommt.

Als H₂O-Dampf-sperrende Polymerharze werden bevorzugt Co- und Terpolymere eingesetzt, die aus mindestens zwei der folgenden Monomere aufgebaut sind: Acrylate, Methacrylate, Vinylacetat, Vinylalkohol, Ethylen, Propylen, Butadien, Styrol, Acrylsäure, Methacrylsäure, Acrylamid- und Acrylnitril.

Selbstverständlich können deren Mischungen untereinander zur Durchführung des erfindungsgemäßen Verfahrens eingesetzt werden.

Solche Copolymerisate und Verfahren zu ihrer Herstellung sind bekannt und ausführlich beschrieben (vgl. z.B.; R.W. Lenz, Organic Chemistry of Synthetic High Polymers, Interscience Publishers, New York (1976) oder Encyclopedia of Polymer Science and Engineering, Wiley-Interscience, New York (1985), S. 211-299).

Die Molmassen-Grenzen der erfindungsgemäß geeigneten Copolymerisate ergeben sich u.a. dadurch, daß bei zu geringem Molekulargewicht die Heißwasser-Resistenz der Beschichtung im Rahmen des zur Wurstherstellung notwendigen Brühens nicht ausreicht und daß bei zu hohem Molekulargewicht Verfilmungsschwierigkeiten beim Beschichten auftreten.

Die Variationsbreite hinsichtlich der Zusammensetzung der erfindungsgemäß geeigneten Co-, Ter- bzw. Mischpolymerisate wird u.a. dadurch begrenzt, daß die Beschichtung einerseits nicht zu weich sein darf, weil die Hülle sonst bei der Lagerung als Rolle verklebt ("verblockt") und andererseits nicht zu spröde, da die Dichtigkeit der Beschichtung sonst infolge mechanischer Belastungen der Hülle nachlassen kann.

Daher wird z.B. bei der erfindungsgemäßen Verwendung von Copolymeren auf der Basis partiell verseiften Polyvinylacetats ein Hydrolysegrad von > 90 % sowie ein Molekulargewicht > 50.000 g/mol und Acrylnitril-haltiger Co- bzw. Terpolymerisate mit einem Acrylnitrilgehalt von ≧ 25 Gew.-% und der Molmasse > 25.000 g/mol sowie bei Acrylat-haltigen Copolymeren eine Molmasse > 150.000 g/mol bevorzugt.

Erfindungsgemäß weisen die Schlauchhüllen eine zusätzliche O₂-Sperrschicht, bestehend aus Acrylnitril, mit einem Acrylnitrilgehalt von ≧ 25 Gew.-%, aus Butadien, mit einem Butadiengehalt von ≧ 35 Gew.-%, Acrylsäuremonomer, mit einem Acrylsäuremonomergehalt von 0-20 Gew.-%., und gegebenenfalls Styrol, mit einem Styrolgehalt von 0-20 Gew.-% auf.

Nach bisherigen Beobachtungen sind zur Herstellung von O₂-Sperrschichten Co- und Terpolymerisate des Acrylnitrils mit Butadien und Styrol bzw. mit Acrylsäureestern wie Methylmethacrylat, Acrylamid, Butylacrylat und Hydroxybutylacrylat mit einem Acrylnitrilgehalt von mindestens 20 Gew.-%, vorzugsweise jedoch von 25-60 Gew.-% und besonders bevorzugt 35-54 Gew.-%, gut geeignet.

Die oben angegebenen Polyacrylnitriltypen sind seit langem bekannt. Zur Durchführung des Verfahrens eignen sich die bereits erwähnten Copolymerisate des Acrylnitrils mit Butadien und gegebenenfalls mit Acrylmonomeren und Styrol sehr gut. In diesem Zusammenhang sei auf die Copolymerisate des 1,3- und 1,2-Butadien mit Acrylnitril mit einem Acrylnitrilgehalt von 45 Gew.-% oder auf Copolymere des Acrylnitrils mit Butadien und Acrylsäureestern, bestehend aus 30 Gew.-% Acrylntril, 50 Gew.-% Butadien, 10 Gew.-% Methacrylsäureester, 10 Gew.-% Methacrylsäureamid und 10 Gew.-% Styrol hingewiesen. Die Molmasse der besagten Polymerisate kann zwischen 5.000 bis 10⁶ g/Mol breit variiert werden. Selbstverständlich können diese Polymerisate mit polaren Gruppen wie HOOC-und HO-Gruppen versehen werden, um ihre Emulgierbarkeit bzw. Dispergierbarkeit im Wasser zu verbessern. Um ein mögliches Verblocken zu verhindern, können die besagten Systeme mit zusätzlichen Bindemitteln der T_{G} > 80°C in Mengen 0,5 - 10 Gew.-% - bezogen auf die Gesamtbindemittelmasse - versetzt werden. In diesem Zusammenhang sei auf Styrol-Acrylat-Copolymerisate und Styrol-Acrylat-MSA (Maleinsäureanhydrid) Terpolymerisate mit dem T_{G}-Bereich 80-120°C hingewiesen.

Um die bevorzugte Applikation der organohalogenfreien Ausstattung aus wäßriger Lösung, Emulsion oder Dispersion zu ermöglichen, können auch die genannten Co- oder Terpolymerisate zur Verbesserung ihrer Dispergier- bzw. Emulgierbarkeit bekanntermaßen zusätzlich polare Gruppen wie Carboxyl- oder Hydroxylreste enthalten. Die erfindungsgemäßen wäßrigen Beschichtungssysteme auf der Basis der beschriebenen Copolymerisate können zusätzlich übliche Hilfsstoffe zur Verbesserung der Dispergier- bzw. Emulgierbarkeit der Copolymere und außerdem bekannte Zusatzmittel wie Katalysatoren, Pigmente, Lösungsmittel, Verlaufshilfsmittel, Füllstoffe, Gleitmittel, Abstandshalter usw. umfassen.

Die Barrierewirkung der erfindungsgemäß eingesetzten Copolymere kann bekanntermaßen dadurch verbessert werden, daß diese z.B. über die enthaltenen Carboxyl- oder oder Hydroxyl-Gruppen vernetzt werden. Dafür stehen u.a. Aziridine, Dialdehyde, Harnstoff- und Melamin-Formaldehyd-Harze, Polyamid-Epichlorhydrin-Harze, Alkalimetall-Hydroxide, Schwefel, Zink- und Zirkonium-Salze und Polycarbonsäuren zur Verfügung. Solche Vernetzungssysteme sind bekannt und z.B. in P. Moles, Polym. Paint Colour J., 181 (1991) 266-267, 282 und D. Lämmermann, Melliand Textilber., 73 (1992), 274-279 beschrieben.

Auch wärmehärtbare Acryl-Copolymerisate, wie sie an sich bekannt sind (vgl. z.B.; K. Pleßke, Kunststoffe, 59 (1969), 247-251) können verwendet werden.

Wie schon beschrieben, besteht die besondere Wirkung der erfindungsgemäßen organohalogenfreien Ausstattung darin, daß im Verbund mit dem Trägermaterial überraschend synergistische Effekte hinsichtlich der Wasserdampf- und Sauerstoff-Dichtigkeit auftreten. Die durch die Kombination von Wachs und polymeren Bindemitteln zu erzielenden Barriere-Eigenschaften sind wesentlich besser als es aufgrund einer Addition der Sperrwirkungen der Einzelkomponenten bei vergleichbarer Auftragsstärke zu erwarten wäre. Außerdem ergibt sich eine deutlich erhöhte Stabilität des Eigenschaftsprofils bei thermischen und mechanischen Belastungen der Hülle, wie sie üblicherweise im Rahmen der Wurstherstellung und -distribution auftreten.

Die erfindungsgemäße Zweischichtbeschichtung (a und b) kann in beliebiger Reihenfolge vorgenommen werden.

Der in Wasser emulgierter bzw. -dispergierter Form vorliegenden erfindungsgemäßen Beschichtungsmitteln können Hilfsmittel zugesetzt werden, welche der Koagulation der Polymerteilchen entgegenwirken und dadurch die Stabilität der Dispersion erhöhen oder erst zu einer Emulgier- bzw. Dispergierbarkeit des Polmers führen. Bei den Hilfsmitteln handelt es sich im allgemeinen um anionische, kationische oder neutrale, niedermolekulare, oligomere oder polymere Emulgatoren, Tenside oder Schutzkolloide der bekannten Art (vgl. z.B.: Ullmanns Encyklopädie der technischen Chemie, Bd. 2, S. 273-281, Verlag Chemie, Weinheim (1972) oder ebenda Bd. 10, S. 449-473 (1975)).

Die Überführung der erfindungsgemäß zu verwendenden Copolymere und Wachse bzw. deren Mischungen in eine wäßrige Lösung, Emulsion oder Dispersion wird nach bekannten Verfahren entweder durch Lösen in einem mit Wasser mischbaren Lösungsmittel wie Aceton oder Tetrahydrofuran und anschließendem Zusatz von Wasser und Entfernung des Lösungsmittels oder durch Anwendung hoher Scherkräfte, z.B. mit einem Ultra-Turrax-Rührer unter Verwendung von Düsen oder Dissolverscheiben, vollzogen.

Die Feststoff-Anteile an der wäßrigen Lösung, Emulsion oder Dispersion betragen vorzugsweise 15 bis 35 Gew.-%. Für einen optimalen Auftrag der Beschichtung wird ein Viskositätsbereich von 50-60 mPas.sec empfohlen.

Ohne den Umfang der Erfindung einzuschränken, sei darauf hingewiesen, daß
- die Beschichtung eine ausreichende Haftung zum Untergrund besitzen und
- im gleichem Maße wie der Träger eine hydrophile Schrumpffähigkeit aufweisen soll.
- Ferner sollen diese Eigenschaften unter den im Rahmen des Wurstverarbeitungsprozesses üblicherweise auftretenden thermischen und mechanischen Belastungen beigehalten werden (vgl. hierzu G. Effenberger, Wursthüllen Kunstdarm, Herstellung, Eigenschaften und Anwendung, Holzmann Buchverlag, D-8939 Bad Wörishofen (1991)).

Die vorliegende Erfindung soll anhand der nachfolgenden Ausführungsbeispiele näher erläutert werden. Die prozentualen Konzentrationsangaben beziehen sich auf den Feststoffgehalt und die angegebenen Permeationswerte sind gemäß DIN (Wasserdampf: DIN 53 122, 23°C, 85 % r. F.; Sauerstoff: DIN 53 380, 23°C, 75 % r. F.) ermittelt. Zur Bestimmung der Gewichtsverluste werden 50 cm lange Hüllenabschnitte des Kalibers 60 mm mit Brühwurstbrät gefüllt und im Kühlraum bei 2°C und 65 % r.F.) gelagert.

### Beispiel 1

Auf ein Al-Blech mit den Maßen 550 x 153 mm wird eine ca. 500 mm lange und 152 mm breite, mittels der Sprühflasche angefeuchtet, herkömmliche, faserverstärkte Schlauchhülle auf Basis von regenerierter Cellulose der Fa. Wolff Walsrode AG, D-3030 Walsrode, gezogen. Dieses wird dann in einem auf 165°C vorgeheizten Trockenschrank gegen den Thermofühler gestellt und bis zu einer Oberflächentemperatur von 118 bis 125°C getrocknet. Nach der Entnahme und Abkühlung wird nun auf den absolut plan liegenden Kunstdarm mit einer Handrakel eine wäßrige, 1,2 %ige Polyamidaminharz-Lösung des Typs Nadavin LT N der Fa. Bayer AG, D-5090 Leverkusen, aufgetragen. Die so mit einem Haftvermittler versehene Schlauchhülle wird im Trockenschrank bis zu einer Oberflächentemperatur von 130°C getrocknet und anschließend auf Raumtemperatur abgekühlt.

Nun wird die Probe nacheinander mit einer 40 %igen wäßrigen Dispersion, deren Bindemittel aus einem Copolymer mit 30 % Acrylnitril, 45 % Butadien, 4 % Acrylsäure und 7 % Methacrylamid und 14 % Styrol besteht und zusätzlich 5 % handelsübliche Emulgatoren erhält und anschließend mit einer 40 %igen wäßrigen Dispersion, deren Bindemittel aus einem Copolymer mit 30 % Acrylnitril, 55 % Butadien, 6 % Methacrylsäure, 7 % Methacrylamid und 2 % Styrol besteht und 5 % handelsübliche Emulgatoren aufweist und ferner zusätzlich mit einer 10 % Polyolefindispersion des Typs Sebosan NGB der Fa. Stockhausen, D-4150 Krefeld, modifiziert ist, beschichtet und bei 120°C getrocknet.

Man bekommt eine mehrlagige Schlauchhülle. Die Schichtdicke der einzelnen Beschichtungen liegt bei 12 µm, die Oberflächenspannung der ersten Schicht liegt bei ^{∼} 40 mN/m und die der Polyolefin-haltigen bei ^{∼} 30 mN/m.

Die Wasserdampfdurchlässigkeit der Gesamtauflage liegt bei ^{∼} 24 g/m² 24 h und ihre O₂-Durchlässigkeit bei 30 cm³/m² 24 h bar.

Die so hergestellten Beschichtungen zeichnen sich durch ihre Dehnbarkeit, Lackverankerung, Kochfestigkeit und Bräthaftung aus.

### Beispiel 2

Eine Schlauchhülle, nach Beispiel 1, wird mit dem Polyaminhaftvermittler und der Copolyacrylnitrilauflage nach Beispiel 1 versehen und anschließend mit 40 %igen wäßrigen, polyolefinmodifizierten Dispersion beschichtet und bei 120°C getrocknet. Das Bindemittel dieser Dispersion besteht aus einem Copolymer mit 30 % Acrylnitril, 45 % Butadien, 4 % Methacrylsäure, 7 % Methacrylamin und 14 % Styrol. Ferner enthält sie 5 % handelsübliche Emulgatoren und weist noch zusätzlich 15 % Polyolefindispersion des Typs Talofin ES der Fa. Stockhausen, D-4150 Krefeld, auf.

Man bekommt eine mehrlagige Schlauchhülle, Die Schichtdicke der einzelnen Beschichtungen liegt bei ^{∼} 12 µm. Die Wasserdampfdurchlässigkeit der Probe liegt bei ^{∼} 18 g/m².24 h und ihre O₂-Durchlässigkeit bei ^{∼} 30 cm³/m³.24 h bar. Die Oberflächenspannung der polyolefinmodifizierten Auflage liegt bei ^{∼} 30 mN/m.

Die erfindungsgemäße Schlauchhülle zeichnet sich durch ihre Dehnbarkeit, Kochfestigkeit und Bräthaftung aus.

### Beispiel 3

Eine Schlauchhülle, nach Beispiel 1, wird direkt mit einer 30 %igen Emulsion auf Basis eines Copolymers aus Acrylnitril, Acrylamid, Butadien und Styrol des Typs Euderm Resin 40 B der Fa. Bayer AG, D-5090 Leverkusen, beschichtet und bei 120°C getrocknet. Nun wird die Probe mit einer 30 %igen, wäßrigen polyolefinmodifizierten Dispersion beschichtet und bei 130°C getrocknet. Das Bindemittel dieser Dispersion besteht aus einem Copolymer mit 40 % Acrylnitril, 40 % Butadien, 10 % Styrol und 10 % Acrylamid. Ferner enthält sie noch zusätzlich 15 % Polyolefindispersion des Typs Ultralube W 813 der Surface-Chemie GmbH, D-5448 Kastellaun.

Man bekommt eine mehrschichtige Schlauchhülle. Ihre Wasserdampfdurchlässigkeit liegt bei ^{∼} 25 g/m².24 h und O₂-Durchlässigkeit bei ^{∼} 35 cm³/m².24 h bar. Die Schichtdicke der Gesamtauflage liegt bei ^{∼} 22 µm. Die Oberflächenspannung der obersten Beschichtung liegt bei ^{∼} 32 m/Nm. Die so modifizierte Schlauchhülle ist dehnbar, kochfest und weist eine gute Bräthaftung auf.

### Beispiel 4

Auf ein Al-Blech mit den Maßen 550x153 mm wird eine ca. 500 mm lange und 152 mm breite, mittels Sprühflasche angefeuchtete, herkömmliche, faserverstärkte Schlauchhülle auf Basis von regenerierter Cellulose der Fa. Wolff Walsrode AG, D-3030 Walsrode, gezogen. Diese wird dann in einem auf 165°C vorgeheizten Trockenschrank gegen den Thermofühler gestellt und bis zu einer Oberflächentemperatur von 120 bis 125°C getrocknet. Nach der Entnahme und Abkühlung wird nun auf dem absolut plan liegenden Kunstdarm mit einer Handrakel eine 1,5 %ige, wäßrige Polyamidaminharz-Lösung des Typs Nadavin LT N der Fa. Bayer AG, D-5090 Leverkusen, aufgetragen. Die so mit einem Haftvermittler versehene Schlauchhülle wird im Trockenschrank bis zu einer Oberflächentemperatur von 130°C getrocknet und anschließend auf Raumtemperatur abgekühlt. Nun wird die Probe nacheinander mit einer 40 %igen Copolymerdispersion bestehend aus Wasser und einer Copolymer auf Basis von Acrylnitril und Butadien mit ca. 45 %igem Acrylnitrilgehalt des Tpys Perburan N-Latex KA 8239 der Fa. Bayer und anschließend mit einer Abmischung bestehend aus 9,0 Teilen -COOH Gruppen-haltiger Polyacrylnitrildispersion (40 %ig, mit 40 % Acrylnitrilgehalt) des Typs KA 8250 der Fa. Bayer AG und 3,0 Teile Polyolefinemulsion 50 %ige Wachsdispersion des Typs Mobilcer 216 der Fa. Mobil, D-2000 Hamburg, nach Beispiel 1 beschichtet.

Man bekommt eine mehrlagige Schlauchhülle. Die Schichtdicke der einzelnen Beschichtungen liegt bei ^{∼} 12 µm. Die Oberflächenspannung der ersten Auflage liegt bei ^{∼} 40 mN/m und die der zweiten bei ^{∼} 32 mN/m.

Ihr WDDU-Wert (Wasserdampfdurchlässigkeit) liegt bei ^{∼} 25 g/m².24 h und ihre O₂-Durchlässigkeit bei ^{∼} 28 cm³/m²·24 h bar.

Die so hergestellten Beschichtungen zeichnen sich durch ihre Dehnbarkeit, Haftfestigkeit, Lackverankerung und Bräthaftung aus.

### Beispiel 5

Eine Kunstdarmhülle wird nach Beispiel 4 präpariert und mit einer O₂-Sperrauflage auf Polyacrylnitrilbasis versehen, Nun wird sie mit einer wäßrigen Dispersion bestehend aus 18 % Joucryl 77, einer Acrylat-Dispersion der Fa. S,C, Johnson Polymer b.v., NL-3641 RV Mijdrecht und 7 % Ultralube W 7090, einer Wachsdispersion der Fa. Surface-Chemie GmbH, D-5448 Kastellaun, beschichtet. Die Verfilmung geschieht bis zum Erreichen einer Oberflächentemperatur von 145°C.

Es wird eine flexible, nicht klebende, gut haftende Beschichtung mit einer Trockenfilmstärke von ca. 2,8 µm erhalten, die einen WDDU-Wert des Materials von 28 g/m²·24 h und eine O₂-Durchlässigkeit von 30 cm³/m²·24 bar liefert. Bei der anschließenden Anwendung der so ausgestatteten Hülle für die Herstellung und Lagerung von Brühwürsten zeigt sich, daß die Beschichtung in gleichem Maße wie das Trägermaterial schrumpffähig ist und ihre Eigenschaften unter den dabei auftretenden thermischen und mechanischen Belastungen beibehält. Der Gewichtsverlust beträgt nach 10 Tagen 1,8 %.

### Beispiel 6

Entsprechend Beispiel 5 wird eine Kunstdarmhülle präpariert und lackiert. Die letzte Beschichtungsdispersion enthält statt Ultralube W 7090 7 % Michem Lube 160 E (Fa. Michelman Int. & Co. SNC, B-6790 Aubange).

Es wird eine flexible, nicht klebende, gut haftende Beschichtung mit einer Trockenfilmstärke von ca. 3,2 µm erhalten, die einen WDDU-Wert des Materials von 10 g/m²·24 h und eine O₂-Durchlässigkeit von 28 cm/m²·bar·24 h liefert. Bei der entsprechend Beispiel 3 vorgenommenen Anwendung als Hülle für die Brühwurst-Herstellung und -Lagerung ergibt sich ein Gewichtsverlust von 1,9 % nach 10 Tagen, Das Material entspricht hinsichtlich seiner Schrumpffähigkeit und Resistenz gegenüber thermischen und mechanischen Belastungen den erfindungsgemäßen Ansprüchen.

### Beispiel 7

Entsprechend Beispiel 4 wird eine Kunstdarmhülle mit einer O₂-Sperrauflage versehen. Die weitere Beschichtung erfolgt mit einer wäßrigen Dispersion, die 30 % Styrofan DS 2306 X (Fa. BASF AG, W-6700 Ludwigshafen) und 3 % Michem Lube 182 (Fa. Michelman Int. & Co., SNC, B-6790 Aubange) enthält.

Es wird eine flexible, nicht klebande, gut haftende Beschichtung mit einer Trockenfilmstärke von ca. 5,2 µm erhalten, die einen WDDU-Wert des Materials von 14 g/m² und eine O₂-Durchlässigkeit von 28 cm³/m²·bar·24 h liefert. Bei der entsprechend Beispiel 3 vorgenommenen Anwendung als Hülle für die Brühwurst-Herstellung und -Lagerung ergibt sich ein Gewichtsverlust von 2,1 % nach 10 Tagen. Das Material entspricht hinsichtlich seiner Schrumpffähigkeit und Resistenz gegenüber thermischen und mechanischen Balastungen den erfindungsgemäßen Ansprüchen.

### Vergleichsbeispiel 1

Ein ca. 50 cm langer Abschnitt einer faserverstärkten Kunstdarm-Schlauchhülle (FRO-E, Kaliber 105 mm, Fa. Wolff Walsrode AG, D-3030 Walsrode) wird auf einer Glasplatte passender Größe gezogen und durch Besprühen mit Wasser angefeuchtet. Die so präparierte Probe wird dann in einem auf 180°C vorgeheizten Umluft-Trockenschrank bis zum Erreichen einer Oberflächentemperatur von 118-125°C getrocknet und anschließend auf Raumtemperatur angekühlt. Die nachfolgende Beschichtung geschieht einseitig auf der völlig plan liegenden, aufgezogenen Schlauchhülle mit Hilfe einer Rakel. Zunächst wird eine Haftvermittlerschicht unter Verwendung einer wäßrigen Lösung, die 1,2 % eines Polyamid-Epichlorhydrin-Harzes (Kymene SLX, Fa. Hercules, D-5200 Siegburg) und 10 % Glycerin enthält, appliziert. Die Trocknung der Probe erfolgt bis zum Erreichen einer Oberflächenternperatur von 125°C im Umlufttrockenschrank und anschließendem Abkühlen auf Raumtemperatur. In entsprechender Weise wird dann eine 32 %ige, wäßrige Polyethylen-Dispersion (Worlee-Wax 8510, Worlee GmbH, D-2400 Lübeck) aufgetragen. Die oberflächliche Endtemperatur der Probe beim Verfilmungsprozeß beträgt hier 145-150°C.

Es wird eine spröde, schlecht haftende Beschichtung mit einer Trockenfilmstärke von ca. 10 µm erhalten, die eine Wasserdampf-Durchlässigkeit (WDDU) des Materials von 120 g/m²·24 h liefert. Die unbeschichtete Kunstdarmhülle weist einen WDDU-Wert von > 2000 g/m²·24 h auf.

### Vergleichsbeispiel 2

Entsprechend Beispiel 1 wird eine Kunstdarmhülle präpariert und lackiert, wobei die dritte Beschichtung mit einer nicht modifizierten, reinen 18 %igen, wäßrigen Dispersion eines Acrylat-Coplymers (Joncryl 77, Fa. S.C. Johnson Polymer b.v. NL-3641 RV Mijdrecht) erfolgt. Die Verfilmung geschieht unter den in Beispiel 1 angegebenen Bedingungen.

Es wird eine flexible, gering klebende, gut haftende Beschichtung mit einer Trockenfilmstärke von ca. 2,3 µm erhalten, die einen WDDU-Wert des Materials von 339 g/m²·24 h und eine O₂-Durchlässigkeit von 200 cm g/m²·bar·24 h liefert. Die Sauerstoff-Durchlässigkeit der unbeschichteten Kunstdarmhülle beträgt 240 g/m²·bar· 24 h.

## Patentansprüche

1. Organochlorfreie Schlauchhülle auf der Basis von regenerierten Cellulose-Trägern, deren Oberfläche mit
a. einer 5-40 µm starken, polymeren, chlorfreien H₂O-Dampfsperrschicht, die eine H₂O-Dampfdurchlässigkeit von höchstens 50 g/m²·24 h und eine Oberflächenspannung von ≦ 34 mN/m aufweist, und
b. einer zusätzlich 5-40 µm starken, polymeren, chlorfreien O₂-Sperrschicht, die eine O₂-Durchlässigkeit von höchstens 120 cm³/m²·24 h · bar und eine Oberflächenspannung von ≧ 38 mN/m aufweist,
beschichtet ist.

2. Schlauchhülle nach Anspruch 1, dadurch gekennzeichnet, daß als Träger regenerierte Cellulose bzw. deren faserverstärkte Modifikationen vorliegt.

3. Schlauchhülle nach Anspruch 1 oder 2, dadurch gekennzeichnet, daß man zur Verstärkung Naturfasern, Hanffasern, Papierfasern, Polyamid-, Polyester- und/oder Polyacrylnitril-Fasern einsetzt.

4. Schlauchhülle nach einem der Ansprüche 1-3, dadurch gekennzeichnet, daß man gegebenenfalls als Haftvermittler wäßrige Lösungen, Dispersionen oder Emulsionen auf Basis von aliphatischen Polyamid-Polyaminen, die gegebenenfalls zusätzliche kationische Gruppen enthalten, verwendet.

5. Schlauchhülle nach Ansprüche 1 - 4, dadurch gekennzeichnet, daß als O₂-Sperrschicht Polymerisate bestehend aus Acrylnitril - mit mindestens 25 Gew.-% Acrylnitrilanteil - aus Butadien - mit mindestens 30 Gew.-% Butadienanteil - und gegebenenfalls aus Acrylamid bzw. Acrylsäure bzw. Styrol und einer Oberflächenspannung von 38-50 mN/m vorliegen.

6. Schlauchhülle nach Anspruch 5, dadurch gekennzeichnet, daß zusätzliche polare Gruppen vorliegen.

7. Schlauchhülle nach einem der Ansprüche 1-6, dadurch gekennzeichnet, daß als H₂O-Dampfsperrschicht polymere Bindemittel oder Bindemittelmischungen, die mindestens aus zwei der folgenden Monomere aufgebaut sind: Acrylate, Methacrylate, Vinylacetat, Vinylalkohol, Ethylen, Butadien, Styrol, Acrylsäure und Methacrylsäure, Acrylamid und Acrylnitril und eine zusätzliche Polyolefinmodifizierung aufweisen, vorliegen.

8. Schlauchhülle nach Anspruch 7, dadurch gekennzeichnet, daß sie Modifikatoren auf Basis von natürlichen und synthetischen Wachsen enthalten.

9. Verwendung derr Schlauchhüllen gemäß einem der Ansprüche 1-8 zur Herstellung von Wursthüllen.

## Claims

1. Tubular casing containing no organochlorine compounds based on regenerated cellulose supports, the surface of which supports is coated with
a. a polymeric H₂O vapour barrier layer containing no chlorine and of a thickness of 5-40 µm, which layer has an H₂O vapour permeability of at most 50 g/m²·24 h and a surface tension of ≦ 34 mN/m, and
b. an additional polymeric O₂ barrier layer containing no chlorine and of a thickness of 5-40 µm, which layer has an O₂ permeability of at most 120 cm³/m²·24 h·bar and a surface tension of ≧ 38 mN/m.

2. Tubular casing according to claim 1, characterised in that the support comprises regenerated cellulose or the fibre-reinforced modifications thereof.

3. Tubular casing according to claim 1 or 2, characterised in that natural fibres, hemp fibres, paper fibres, polyamide, polyester and/or polyacrylonitrile fibres are used for reinforcement.

4. Tubular casing according to one of claims 1 to 3, characterised in that aqueous solutions, dispersions or emulsions based on aliphatic polyamide/polyamines, optionally containing additional cationic groups, are optionally used as coupling agents.

5. Tubular casing according to claims 1 to 4, characterised in that polymers consisting of acrylonitrile (having an acrylonitrile content of at least 25 wt.%), of butadiene (having a butadiene content of at least 30 wt.%) and optionally of acrylamide or acrylic acid or styrene and of a surface tension of 38-50 mN/m are present as the O₂ barrier layer.

6. Tubular casing according to claim 5, characterised in that additional polar groups are present.

7. Tubular casing according to one of claims 1 to 6, characterised in that polymeric binders or binder mixtures synthesised from at least two of the following monomers: acrylates, methacrylates, vinyl acetate, vinyl alcohol, ethylene, butadiene, styrene, acrylic acid and methacrylic acid, acrylamide and acrylonitrile and an additional polyolefin modification are present as the H₂O vapour barrier layer.

8. Tubular casing according to claim 7, characterised in that it contains modifiers based on natural and synthetic waxes.

9. Use of the tubular casings according to one of claims 1 to 8 for the production of sausage casings.

## Revendications

1. Enveloppes tubulaires exemptes de composés organochlorés à base de supports en cellulose régénérée dont la surface est enduite avec
a. une couche barrière vis-à-vis de la vapeur d'eau exempte de chlore, polymère, épaisse de 5 à 40 µm, qui présente une perméabilité à la vapeur d'eau de 50 g/m².24 h au plus et une tension superficielle ≦ 34 mN/m, et
b. une couche barrière vis-à-vis de O₂ exempte de chlore, polymère, épaisse de 5 à 40 µm, supplémentaire, qui présente une perméabilité à l'oxygène de 120 cm³/m².24 h.bar au plus et une tension superficielle ≧ 38 mN/m.

2. Enveloppes tubulaires selon la revendication 1, caractérisées en ce que, comme support, on a de la cellulose régénérée ou ses modifications renforcées par des fibres.

3. Enveloppes tubulaires selon la revendication 1 ou 2, caractérisées en ce que l'on utilise pour le renforcement des fibres naturelles, des fibres de chanvre, de papier, de polyamide, de polyester et/ou de polyacrylonitrile.

4. Enveloppes tubulaires selon l'une des revendications 1 à 3, caractérisées en ce que l'on utilise éventuellement comme agent adhésif des solutions, des dispersions ou des émulsions aqueuses à base de polyamide-polyamines aliphatiques, qui contiennent éventuellement des groupes cationiques supplémentaires.

5. Enveloppes tubulaires selon les revendications 1 à 4, caractérisées en ce que, comme couche barrière vis-à-vis de O₂, on a des polymères constitués d'acrylonitrile - avec une proportion d'acrylonitrile de 25 % en poids au moins - de butadiène - avec une proportion de butadiène de 30 % en poids au moins - et éventuellement d'acrylamide, d'acide acrylique ou de styrène, et d'une tension superficielle de 38 à 50 mN/m.

6. Enveloppes tubulaires selon la revendication 5, caractérisées en ce qu'elles comportent des groupes polaires supplémentaires.

7. Enveloppes tubulaires selon l'une des revendications 1 à 6, caractérisées en ce que, comme couche barrière vis-à-vis de la vapeur d'eau, on a des liants ou des mélanges de liants polymères, qui sont constitués d'au moins deux des monomères suivants : acrylates, méthacrylates, acétate de vinyle, vinylalcool, éthylène, butadiène, styrène, acide acrylique et acide méthacrylique, acrylamide et acrylonitrile, et comportent une modification supplémentaire par une polyoléfine.

8. Enveloppes tubulaires selon la revendication 7, caractérisées en ce qu'elles contiennent des agents modificateurs à base de cires naturelles et synthétiques.

9. Application des enveloppes tubulaires selon l'une des revendications 1 à 8 à la fabrication d'enveloppes de saucisses.
